# EUROPEAN PATENT SPECIFICATION

(11) **EP 4 503 705 B1**
(45) Date of publication and mention of the grant of the patent: **08.07.2026**
(21) Application number: 23810903.7
(22) Date of filing: 16.05.2023
(51) Int. Cl.: H04W 24/02, H04L 41/5019, H04L 41/0894, H04L 41/0895, H04L 41/16, H04L 41/40, H04L 41/5054, H04W 28/24

(54) **NETWORK SLICE PROCESSING METHOD AND APPARATUS, ELECTRONIC DEVICE, AND STORAGE MEDIUM**
VERFAHREN UND VORRICHTUNG ZUR VERARBEITUNG VON NETZWERK-SLICES, ELEKTRONISCHE VORRICHTUNG UND SPEICHERMEDIUM
PROCÉDÉ ET APPAREIL DE TRAITEMENT DE TRANCHE DE RÉSEAU, DISPOSITIF ÉLECTRONIQUE ET SUPPORT DE STOCKAGE

(30) Priority: 24.05.2022 CN 202210573265
(43) Date of publication of application: 05.02.2025
(73) Proprietor: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HU, Yushuang, Beijing 100032 (CN); YANG, Hongwei, Beijing 100032 (CN)
(74) Representative: J A Kemp LLP
(86) International application number: PCT/CN2023/094555
(87) International publication number: WO 2023/226830

(56) References cited:
- CN-A- 109 495 907
- CN-A- 110 896 355
- CN-A- 111 278 016
- CN-A- 112 511 342
- US-A1- 2020 178 093
- US-A1- 2021 194 771
- US-A1- 2022 158 913
- YUSHUANG HU CHINA MOBILE CHINA LU LU CHINA MOBILE CHINA DAN XU CHINA TELECOM CHINA: "Draft new Recommendation ITU-T Y.IMT2020-IBNMO: "Intent-based network management and orchestration for network slicing in IMT-2020 networks and beyond";TDxxx/WP1", vol. 21/13, 19 March 2023 (2023-03-19), pages 1 - 21, XP044374141, Retrieved from the Internet <URL:https://www-api.itu.int/ifa/t/2022/sg13/exchange/wp1/q21/2023-03/Draft/drafting%20output%20TDxxx%20Y.IBNMO.docx> [retrieved on 20230319]
- ZHANG JIAMING ET AL: "A Conflict Resolution Scheme in Intent-Driven Network", 2021 IEEE/CIC INTERNATIONAL CONFERENCE ON COMMUNICATIONS IN CHINA (ICCC), IEEE, 28 July 2021 (2021-07-28), pages 23 - 28, XP034012947, DOI: 10.1109/ICCC52777.2021.9580197

## Description

### CROSS-REFERENCE TO RELATED APPLICATIONS

The present application claims the priority of Chinese Patent Application No. 202210573265.5 filed in China on May 24, 2022.

### TECHNICAL FIELD

The present disclosure relates to the field of communications, and in particular, to a network slice processing method and apparatus, and storage medium.

### BACKGROUND

With the diversification of application scenarios and services, the network scale is increasingly larger. Conventional networks require a large amount of manual configuration and diagnostics, which results in high management overhead. Network management methods can no longer meet user requirements, and network architectures require new levels of management. Computing power and intelligence will be ubiquitous in next-generation mobile networks, and there is a growing consensus that artificial intelligence (particularly machine learning technologies) can be used to reduce the need for manual intervention. With the development of cognition-driven and intention-driven networks, for knowledge defined networks implemented via software defined networks (SDNs), telemetry, biomimetic intelligence, and other technologies, a knowledge plane is introduced into the networks to help achieve the goal of network autonomy.

In the related art, an intention-based network technology is a network managed by using "user intentions", and the network can identify and receive intentions of users (which may include an end user and a network administrator), and perform configuration and adjustment according to the user intentions. The user can acquire a desired result without specifying detailed technical steps in the implementation of configuration and adjustment processes.

However, in the related art, there is no effective solution for network slice (which may also be referred to as a slice) processing in a multi-intention scenario.

Document US2020178093 A1 discloses an intent-driven radio access networking method, including: determining an intent, and performing a slice setting for a slice according to a type of the intent and network performance requirements indicated by the intent; determining an instantiation priority for each slice setting; performing performance evaluation for each existing slice within a network range indicated by the intent, and determining global configuration of each existing slice; after a new slice is added to the current network, configuring a networking mode and network multimode resources for the new slice according to the instantiation priority of the slice setting corresponding to the new slice.

### SUMMARY

The invention is set out in the appended set of claims.

In the solution provided in the embodiments of the present disclosure, in a multi-intention scenario, priorities of intentions are determined based on a policy comprising at least a requirement of an SLA contracted between a network slice client and a network slice provider, and a network slice is created or modified based on the priorities of the intentions, thereby avoiding a conflict between intentions, and improving network slice management efficiency.

### BRIEF DESCRIPTION OF THE DRAWINGS

FIG. 1 is a schematic diagram of an intention-based network slice network management orchestration framework (referred to as an intention network for short in the following description) in the related art;
FIG. 2 is a schematic flowchart of a network slice processing method according to an embodiment of the present disclosure;
FIG. 3 is a schematic flowchart of intention ordering according to an application embodiment of the present disclosure;
FIG. 4 is a schematic flowchart of intention ordering performed by an intention network according to an application embodiment of the present disclosure;
FIG. 5 is a schematic structural diagram of a network slice processing apparatus according to an embodiment of the present disclosure; and
FIG. 6 is a schematic structural diagram of an electronic device according to an embodiment not being part of the invention.

### DETAILED DESCRIPTION

The present disclosure will be described in further detail below with reference to the accompanying drawings and embodiments.

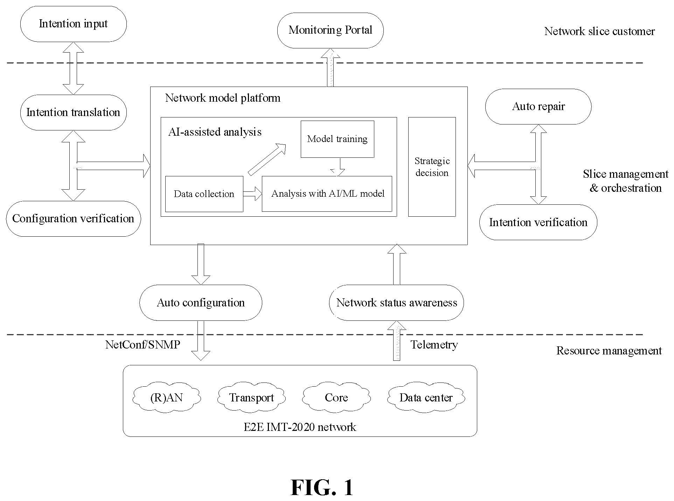

In the related art, as shown in FIG. 1, in a network slice management orchestration architecture, intention-based management and orchestration are introduced, and a highly automated, intelligent, and closed-loop control network can be implemented by means of an intention network.

The function of each module in the intention network will be described in detail below with reference to FIG. 1.

### Intention input module

The intention input module is a portal to be accessed by an end-user, and is the first step in implementation of a user intention. That is, a user may input a service requirement via the intention input module. User experience of the intention input module is the key to whether an intention network system can be implemented and deployed as soon as possible.

### 2) Intention translation module and configuration verification module

The intention translation module is configured to convert the service requirement of the intention input module into a network plan and a device configuration. The configuration verification module is configured to perform configuration verification on a digital twin network or a network platform that actually operates, and detect some exceptions in configurations, such as an address conflict, a routing loop, an unreachable route, etc., by simulating/actually configuring an operation situation on the actual network.

### 3) Auto configuration module

The auto configuration module is configured to automatically deliver the device configuration having undergone the intention verification to a network infrastructure via a standard configuration interface.

### 4) Network status awareness module

The network status awareness module is configured to acquire an operating status of the network infrastructure, including a device status, a link status, a service type, a traffic status, and the like, via information collection technologies including the telemetry technology. The timeliness and comprehensiveness of data collected via the information collection technologies are the key to whether the configuration verification is accurate and complete.

### 5) Intention verification module and auto repair module

The intention verification module is configured to verify in real time whether the user intention is satisfied in an end result of performing in the network infrastructure, and predict, via a machine learning algorithm, whether the user intention can be satisfied within a future period of time. The auto repair module is configured to perform diagnostic analysis on an intention conflict or an existing network fault according to a result of intention guarantee and configuration verification, quickly perform fault delimitation and location analysis, narrow down the range of the fault, and automatically perform fault repair or assist a network administrator in fault repair.

### 6) Network infrastructure (referred to as a network for short)

The infrastructure is a carrier of network operation and a basis for implementing the user intention, and includes network resources, storage resources, computing resources, security resources, and the like.

### 7) Network model platform

The network model platform is a digital platform established based on sufficient awareness of an actual network, can provide a comprehensive, complete, multi-layered network model and data, and includes a network element layer, a network layer, a service layer, and the like. Further, by establishing the network model, data of a plurality of dimensions such as configurations, states, performance, alarms, logs, etc., can be contextually associated. In addition, full life-cycle network data including historical data, current data, future (warning/predictive) data, etc., can be maintained. The network model platform includes an artificial intelligence (AI) assisted system, has a policy decision function, and mainly performs policy delivery for a network data analysis result.

Network slice processing in multi-intention scenarios is not defined in the related art, and upon receiving a plurality of network slice processing intentions, an intention network may have the intention conflict problem.

On that basis, in various embodiments of the present disclosure, in a multi-intention scenario, priorities of intentions are determined based on a policy including at least a requirement of an SLA contracted between network slice clients and a network slice provider, and a network slice is created or modified based on the priorities of the intentions, thereby avoiding a conflict between intentions, and improving network slice management efficiency.

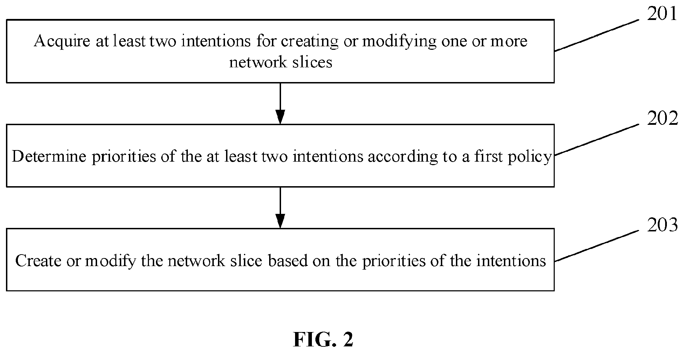

An embodiment of the present disclosure provides a network slice processing method, applied to an electronic device (which may be referred to as a functional body, such as a server). As shown in FIG. 2, the method includes:
Step 201: acquiring at least two intentions for creating or modifying one or more network slices.
Step 202: determining priorities of the at least two intentions according to a first policy.
   Here, the first policy includes at least a requirement of an SLA contracted between a network slice client and a network slice provider.
Step 203: creating or modifying the network slice based on the priorities of the intentions.

In practical applications, the slice client may also be referred to as a network slice client, and the client may also be referred to as a user. The network slice provider may also be referred to as an operator. The network slice may also be referred to as a slice.

In practical applications, the intention may include a service requirement of a network slice client, such as a service type (which may also be referred to as a slice service type, referred to as an SST for short), a service coverage area (which may also be referred to as a creation area), an activation time, network slice performance indicators (which may be referred to as indicators or attributes for short), and the like. Service types corresponding to the network slice may include enhanced mobile broadband (eMBB), ultra-reliable and low latency communications (uRLLC), massive machine type of communication (mMTC), etc. The indicators may include service isolation (which may also be referred to as isolaty, an isolation level, etc.), a quality of service (QoS) level requirement, a latency, etc. Here, contents specifically included in the intention may be set according to requirements, and are not limited in the embodiments of the present disclosure.

In practical applications, that the first policy includes at least a requirement of an SLA contracted between a network slice client and a network slice provider means that the first policy may include information related to an SLA contracted between a network slice client and an operator, for example, the service requirement of a network slice client included in an intention.

In practical applications, an intention of a network slice client may be acquired when the network slice client and the operator sign the SLA.

In practical applications, each intention is used to create or modify one or more network slices. In other words, each intention corresponds to one or more network slices. Network slices corresponding to the at least two intentions may be the same or different.

In practical applications, one network slice client may have a plurality of intentions. In other words, the at least two intentions may be intentions of at least two network slice clients, or the at least two intentions may be intentions of one network slice client. In the case that the at least two intentions are intentions of one network slice client, service types corresponding to the at least two intentions may be the same or different. In other words, the at least two intentions may be intentions of at least two network slices (i.e., network slice services), or the at least two intentions may be intentions of one network slice, that is, the at least two intentions may be intentions of one network slice.

In practical applications, depending on whether the at least two intentions are intentions of at least two network slice clients and whether the at least two intentions are intentions of at least two network slices, specific implementation manners of step 202 are different. That is, the at least two intentions may be prioritized according to the SLA requirements of the network slice clients or the levels of the network slices.

In the case that the at least two intentions are intentions of at least two network slice clients, the priorities of the at least two intentions may be determined according to the requirement of the SLA contracted between the network slice clients and the network slice provider.

On that basis step 202 includes:
determining whether the at least two intentions are intentions of at least two network slice clients, to acquire a first determination result;
in the case that the first determination result is that the at least two intentions are intentions of at least two network slice clients, determining the priorities of the at least two intentions according to the requirement of the SLA contracted between the network slice clients and the network slice provider,
an intention of a network slice client with a high SLA requirement having a high priority.

Accordingly, specific implementation of step 203 may include:
preferentially performing an operation of creating or modifying a network slice of a first intention having a high configuration priority among the at least two intentions.

In practical applications, the configuration priorities of the at least two network slice clients (i.e., high and low SLA requirements of the network slice clients) may be preset according to requirements. Alternatively, the configuration priorities of the at least two network slice clients may be determined based on the contents, such as the service coverage area, the activation time, the service isolation, and the service QoS level requirement, which are included in the at least two intentions.

A function of the service coverage area is to determine whether the at least two intentions will conflict with each other, and when the service coverage areas corresponding to the at least two intentions are the same, the at least two intentions will conflict with each other. In this case, comparison of other included contents between the at least two intentions may be performed, and for example, determination is performed on the service isolation and the service QoS level requirement, so as to determine the configuration priorities of the at least two network slice clients.

Exemplarily, among the at least two network slice clients, a network slice client having a higher service QoS level requirement and a higher service isolation requirement has the right of being created preferentially, that is, the configuration priority of the network slice client is higher than the configuration priorities of the other network slice clients, that is, the SLA requirement of the network slice client is higher than the SLA requirements of the other network slice clients. Accordingly, the configuration priority of the intention (i.e., the first intention) of the network slice client is higher than the configuration priorities of the intentions of the other network slice clients.

In practical applications, in the case that the at least two intentions are intentions of one network slice client and the at least two intentions are intentions of at least two network slices, the priorities of the at least two intentions may be determined according to levels of the at least two network slices.

On that basis, in an embodiment, specific implementation of step 202 includes:
determining whether the at least two intentions are intentions of at least two network slice clients, to acquire a first determination result;
in the case that the first determination result is that the at least two intentions are intentions of one network slice client, determining whether the at least two intentions are intentions of at least two network slices, to acquire a second determination result; and
in the case that the second determination result is that the at least two intentions are intentions of at least two network slices, determining the priorities of the at least two intentions according to levels of the at least two network slices,
an intention of a network slice with a high network slice level having a high priority.

Accordingly, specific implementation of step 203 may include:
preferentially performing an operation of creating or modifying a network slice of a second intention having a high configuration priority among the at least two intentions.

In practical applications, indicator configuration priorities of the at least two network slices (i.e., the levels of the at least two network slices) may be determined according to the requirement of the SLA contracted between a network slice client and the network slice provider, for example, may be determined based on the contents, such as the service coverage area, the activation time, the service isolation, and the service QoS level requirement, corresponding to the at least two intentions.

Exemplarily, if the network slice client needs to create two services at the same time, that is, creation times corresponding to the at least two intentions are the same, the at least two intentions will conflict with each other. In this case, comparison of other included contents between the at least two intentions may be performed, and for example, determination is performed on the service isolation and the service QoS level requirement, so as to determine the indicator configuration priorities of the at least two network slices. Among the at least two network slices, a network slice corresponding to a higher service QoS level requirement and a higher service isolation requirement has the right of being created preferentially, that is, the indicator configuration priority of the network slice is higher than the indicator configuration priorities of the other network slices, that is, the level of the network slice is higher than the levels of the other network slices. Accordingly, the configuration priority of the intention (i.e., the second intention) of the network slice is higher than the configuration priorities of the intentions of the other network slices.

In practical applications, in the case that the at least two intentions are intentions of one network slice client and the at least two intentions are intentions of one network slice, the priorities of the intentions of at least two attributes of the network slice may be determined according to the requirement of the SLA contracted between the network slice client and the network slice provider.

On that basis, in an embodiment, specific implementation of step 202 includes:
determining whether the at least two intentions are intentions of at least two network slice clients, to acquire a first determination result;
in the case that the first determination result is that the at least two intentions are intentions of one network slice client, determining whether the at least two intentions are intentions of at least two network slices, to acquire a second determination result; and
in the case that the second determination result is that the at least two intentions are intentions of one network slice, determining the priorities of the intentions of at least two attributes of the network slice according to the requirement of the SLA contracted between the network slice client and the network slice provider.

Accordingly, specific implementation of step 203 may include:
preferentially performing an operation of creating or modifying a network slice of a third intention having a high configuration priority among the at least two intentions.

In practical applications, when the at least two intentions are intentions of one network slice client and the at least two intentions are for one network slice, it is indicated that the at least two intentions correspond to one network slice, and each intention corresponds to at least one attribute of the network slice.

**In** practical applications, configuration priorities of at least two indicators (i.e., the at least two attributes) may be determined according to the requirement of the SLA contracted between a network slice client and the network slice provider. Exemplarily, in the case that the network slices corresponding to the at least two intentions have high requirements on the latency, a latency indicator needs to be preferentially ensured. That is, the third intention may correspond to the latency indicator of the corresponding network slice. In the case that the network slices corresponding to the at least two intentions have high requirements on the service isolation, a service isolation indicator needs to be preferentially ensured. That is, the third intention may correspond to the service isolation indicator of the corresponding network slice.

**In** practical applications, in the case that a network slice client has no special requirements on the configuration priorities of the at least two indicators, the configuration priorities of the at least two indicators may be determined according to a current network status. A specific method of determining the configuration priorities of the at least two indicators according to the current network status may be set according to requirements, and is not limited in the embodiments of the present disclosure.

**In** practical applications, the network slice processing method provided in the embodiments of the present disclosure may be implemented based on the intention network shown in FIG. 1. When the network slice processing method provided in the embodiments of the present disclosure is implemented, each functional module of the intention network may be understood as a logical functional module. That is, the functional modules may be deployed on different entities or on the same entity.

Exemplarily, step 201 to step 203 may be implemented by the intention input module of the intention network. That is, the intention input module acquires at least two intentions, orders the at least two intentions according to the first policy to acquire a priority result, and performs an operation of creating or modifying a corresponding network slice based on the priority result. In other words, the priorities of the at least two intentions are determined according to the first policy, and the network slice is created or modified based on the priorities of the intentions. The performing, by the intention input module, the priority result may include: sending the at least two intentions to the intention translation module according to the priority result, so that the intention translation module, the network model platform, the configuration verification module, and the auto configuration module perform an operation of creating or modifying a corresponding network slice.

In practical applications, the intention network is a closed-loop control network. In other words, during intention acquisition, the network infrastructure may feed back an indicator value in real time via the network model platform. In this case, the feedback value of the indicator may be compared with the intention, so as to determine whether an operation of creating or modifying a network slice of a corresponding indicator needs to be preferentially performed.

On that basis, in an embodiment, the method may further include:
receiving first information including a feedback value of a first attribute; and
if the first attribute is created or determined, preferentially configuring the first attribute according to the first information.

In practical applications, it can be understood that when the feedback value of the first attribute is received, it is indicated that a network slice has been created for the first attribute. In other words, the first attribute being created or determined refers to a case in which the first attribute has undergone the above determination process of "whether the at least two intentions are intentions of at least two network slice clients and whether the at least two intentions are intentions of at least two network slices" for determining whether there is a conflicting intention and the feedback value does not satisfy the intention. The preferentially configuring the first attribute according to the first information refers to preferentially performing an operation of modifying the network slice of the first attribute.

In an embodiment, specific implementation of step 202 may include:
in the case that the feedback value satisfies the intention, ordering the at least two intentions according to the first policy to acquire the priority result. In other words, in the case that the feedback value satisfies the intention, the priorities of the at least two intentions are determined according to the first policy.

In practical applications, the operation of creating or modifying may include operations of the intention translation module, the configuration verification module, and the auto configuration module of the intention network shown in FIG. 1.

In an embodiment, the method may further include at least one of the following:
converting an intention into a configuration of a network slice, i.e., converting an intention into device configuration information of a network slice;
verifying the configuration, i.e., verifying the device configuration information; and
after verification succeeds, performing the configuration, i.e., after verification succeeds, configuring the network infrastructure based on the device configuration information.

Here, it should be noted that, after step 201 to step 203, one or more of the operations of converting an intention into a configuration of a network slice, verifying the configuration, and after verification succeeds, performing the configuration may be further performed.

In practical applications, the intention translation module may convert an intention into device configuration information of a network slice. The configuration verification module may verify the device configuration information on a digital twin network or an actually operating network platform, and determine whether there is an exception in the device configuration information, such as an address conflict, a routing loop, an unreachable route, etc. The auto configuration module may configure the network infrastructure based on the device configuration information after verification succeeds.

The embodiments of the present disclosure provide the network slice processing method. The method includes: acquiring at least two intentions for creating or modifying one or more network slices; determining priorities of the at least two intentions according to a first policy, the first policy including at least a requirement of an SLA contracted between a network slice client and a network slice provider; and creating or modifying the network slice based on the priorities of the intentions. In the solution provided in the embodiments of the present disclosure, in a multi-intention scenario, priorities of intentions are determined based on a policy including at least a requirement of an SLA contracted between network slice clients and a network slice provider, and a network slice is created or modified based on the priorities of the intentions, thereby avoiding a conflict between intentions, and improving network slice management efficiency.

The present disclosure will be described in further detail below with reference to application embodiments.

In the present application embodiment, the intention network shown in FIG. 1 is employed.

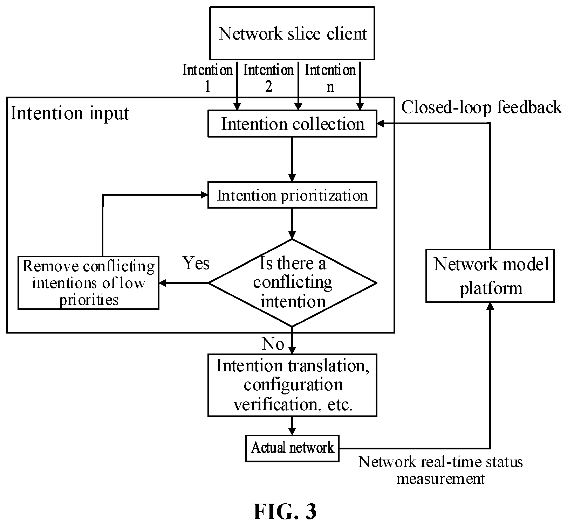

In the present application embodiment, as shown in FIG. 3, one or more network slice clients input n (n is an integer greater than 1) network slice creation intentions to the intention input module. In order to avoid a conflict between intentions, it is necessary to prioritize the plurality of network slice creation intentions according to an intention prioritization principle (i.e., the first policy). During intention prioritization, it is determined whether there are conflicting intentions among the plurality of network slice creation intentions, and conflicting intentions of low priorities are removed. That is, conflicting intentions of low priorities are arranged after conflicting intentions of high priorities. In other words, a network slice corresponding to a conflicting intention of a high priority is preferentially created. After ordering of the plurality of network slice creation intentions is completed, steps of intention translation, configuration delivery, and the like are performed according to a result of the intention ordering.

### Intention prioritization principles include:

Prioritization of a plurality of network slice clients: services of the network slice clients are prioritized according to requirements such as a client service coverage area, an activation time, service isolation, a service QoS level, and the like.

Prioritization of a plurality of network slice services of a single network slice client: if one user needs to create a plurality of network slices, prioritization needs to be performed according to service requirements of the different network slices such as different SSTs (i.e., eMBB, uRLLC, and mMTC) or different activation areas, activation times, service isolation, service QoS levels, and the like of the same SST.

Prioritization of a plurality of attributes of a single network slice service: when a network slice service is provided for a network slice client, for a plurality of attributes corresponding to the network slice, prioritization is performed according to a service requirement. For example, a latency is preferentially ensured for a service having a high latency requirement, and an isolation level is preferentially ensured for a service having a high isolation requirement, and so on.

Single-attribute closed-loop feedback is prioritized: in the case that a closed-loop feedback of an attribute is received while intention collection is being performed for a network slice client, the attribute is preferentially configured. That is, network slice reconfiguration is performed based on a feedback value of the attribute.

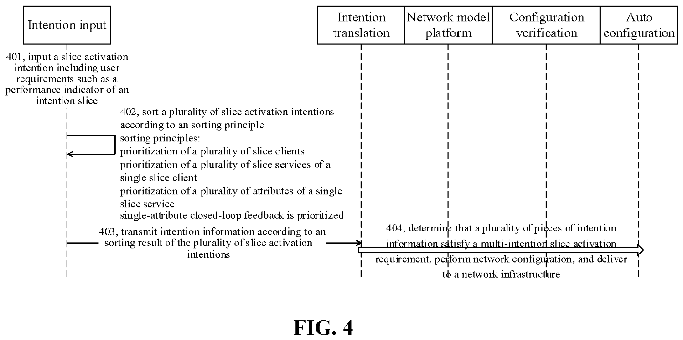

Specifically, in the present application embodiment, as shown in FIG. 4, the process of intention ordering performed by the intention network may include the following steps:
Step 401: inputting, by a user, a network slice creation intention via the intention input module, the network slice creation intention including user requirements such as a performance indicator of an intention network slice, and then performing step 402.
   Here, the user may input a network slice activation intention while signing an SLA with an operator. The network slice activation intention may include contents in the SLA.
Step 402: ordering a plurality of network slice activation intentions according to an ordering principle, and then performing step 403.
Step 403: transmitting intention information to the intention translation module according to a priority result of the plurality of network slice activation intentions, and then performing step 404.
   Here, the intention information transmitted to the intention translation module is intention activation information generated by the intention input module, and the information is used to perform an intention network slice activation operation.
Step 404: determining, by the intention translation module, the network model platform module, the configuration verification module, and the auto configuration module, that a plurality of pieces of intention information satisfy a multi-intention network slice activation requirement (ordered intentions), performing network configuration, and delivering to the network infrastructure.

In step 402, when the intention input module receives, from a plurality of users, requests for network slice activation, or receives, from a single user, a request for activating a plurality of network slices, activation ordering performed on a plurality of instantiated network slices is involved, and ordering principles are classified into the following four ordering types:
Prioritization of a plurality of network slice clients: services of the network slice clients are prioritized according to requirements such as a client service coverage area, an activation time, service isolation, a service QoS level, and the like.

Prioritization of a plurality of network slice services of a single network slice client: if one user needs to create a plurality of network slices, prioritization needs to be performed according to service requirements of the different network slices such as different SSTs (i.e., eMBB, uRLLC, and mMTC) or different activation areas, activation times, service isolation, service QoS levels, and the like of the same SST.

Prioritization of a plurality of attributes of a single network slice service: when a network slice service is provided for a network slice client, for a plurality of attributes corresponding to the network slice, prioritization is performed according to a service requirement. For example, a latency is preferentially ensured for a service having a high latency requirement, and an isolation level is preferentially ensured for a service having a high isolation requirement, and so on.

Single-attribute closed-loop feedback is prioritized: in the case that a closed-loop feedback of an attribute is received while intention collection is being performed for a network slice client, the attribute is preferentially configured. That is, network slice reconfiguration is performed based on a feedback value of the attribute.

In the present application embodiment, when the plurality of network slice activation intentions are ordered according to the above ordering principles, an ordering order is that determination is performed sequentially from 1) to 3). That is, ordering is performed in the order of the following ordering stages:

In a stage of prioritization of a plurality of network slice clients, it is first determined whether the plurality of network slice activation intentions correspond to a plurality of users, and in the case that the plurality of network slice activation intentions are network slice activation intentions of a plurality of users, the plurality of network slice intentions are ordered according to requirements such as a user service coverage area, an activation time, service isolation, a service QoS level, and the like. An ordering principle is as follows: if activation times corresponding to the plurality of network slice activation intentions are the same, it is indicated that the network slice activation intentions are conflicting intentions, and it is necessary to perform determination on coverage areas, service isolation, and service QoS levels corresponding to the plurality of network slice activation intentions. A user having a high service QoS level and a high service isolation requirement has the right of being prioritized for activation. That is, the priority of the user is higher than the priorities of the other users.

Here, after the determination is completed, in the case that the plurality of network slice activation intentions correspond to one user, priority determination of a next level (i.e., stage) is directly performed. That is, determination of 2) is performed. In the case that the plurality of network slice activation intentions correspond to a plurality of users, intentions of users of low priorities are removed. That is, intentions of users of low priorities are arranged after intentions of users of high priorities. Ordering is performed according to the priorities of the users, and priority determination of a next stage is performed on at least one network slice activation intention corresponding to each user.

Exemplarily, for an intention 1, an intention 2, an intention 3, an intention 4, and an intention 5, it is assumed that the intention 1 and the intention 2 are intentions of a user 1, and the intention 3, the intention 4, and the intention 5 are intentions of a user 2. It is further assumed that the priority of the user 2 is higher than that of the user 1. Therefore, an intention priority result acquired in the multi-user prioritization stage is: the intention 3, the intention 4, the intention 5, the intention 1, and the intention 2. Priority determination of a next stage is first performed for the intention 3, the intention 4, and the intention 5, and the priority determination of the next stage is then performed for the intention 1 and the intention 2.

Here, it should be noted that intention ordering is performed in real time.

2) In a network slice stage of prioritization of a plurality of network slice services of a single network slice client, determination of prioritization is performed when a plurality of network slice services need to be activated for a single user. If a plurality of network slices need to be activated for one user, ordering is performed according to requirements such as different SSTs (eMBB, uRLLC, and mMTC) or different activation areas, activation times, service isolation, service QoS levels, and the like of the same SST. An ordering principle is as follows: if a plurality of services need to be activated for the user at the same time, that is, activation times corresponding to a plurality of network slice activation intentions are the same, determination is performed according to requirements on the coverage area, the service isolation, and the QoS level. A service having a high service QoS level and a high service isolation requirement has the right of being activated preferentially. That is, the priority of the network slice service is higher than the priorities of the other network slice services.

Here, after the determination is completed, in the case that the plurality of network slice activation intentions correspond to one network slice service, priority determination of a next level is directly performed. That is, determination of 3) is performed. In the case that the plurality of network slice activation intentions correspond to a plurality of network slice services, intentions of network slice services of low priorities are removed. That is, intentions of network slice services of low priorities are arranged after intentions of network slice services of high priorities. Ordering is performed according to the priorities of the network slice services, and priority determination of a next stage is performed on at least one network slice activation intention corresponding to each network slice service.

Exemplarily, for the intention 3, the intention 4, and the intention 5 of the user 2, it is assumed that the intention 3 corresponds to a service 1, and the intention 4 and the intention 5 correspond to a service 2, and it is assumed that the priority of the service 2 is higher than that of the service 1. Therefore, an intention priority result acquired for the user 2 in the single-user multi-network slice prioritization stage is: the intention 4, the intention 5, and the intention 3. Priority determination of a next stage is performed for the intention 4 and the intention 5.

3) In a network slice stage of prioritization of a plurality of attributes of a single network slice service, determination of prioritization is performed for a plurality of indicators corresponding to a single network slice. When a network slice is provided for a user, for a plurality of indicators corresponding to the network slice, prioritization is performed according to a specific service requirement. For example, a latency indicator is preferentially ensured for a service having a high latency requirement, and an isolation level indicator is preferentially ensured for a service having a high isolation requirement, and so on. Here, in the case that the user does not have special requirements (such as the latency, the isolation, etc.), allocation may be performed sequentially according to the current network status. That is, the plurality of indicators are prioritized according to the network status.

In the above entire intention ordering process, determination of prioritization is performed for the principle that closed-loop feedback of a single indicator of a single network slice is prioritized (i.e., single-attribute closed-loop feedback is prioritized). While intention collection is being performed for the user, if an indicator of the intention has undergone activation determination, that is, the corresponding network slice has been activated, a closed-loop feedback value of the indicator can be received via the network model platform. In the case that the feedback value of the indicator does not satisfy the intention, the indicator is preferentially configured, and the corresponding network slice is modified.

It should be noted that, in practical applications, a newly created network slice should not affect performance of an existing network slice. In other words, network slice activation (i.e., creation) or modification needs to be performed without affecting the performance of the activated network slice.

In the solution provided in the present application embodiment, when a plurality of network slice activation intentions are received, the plurality of network slice activation intentions are ordered according to the principles of prioritization of a plurality of network slice clients, prioritization of a plurality of network slice services of a single network slice client, prioritization of a plurality of attributes of a single network slice service, and ordering performed by prioritizing single-attribute closed-loop feedback, and then steps of intention translation, configuration delivery, etc., are performed, thereby avoiding a conflict between intentions, and improving network slice management efficiency.

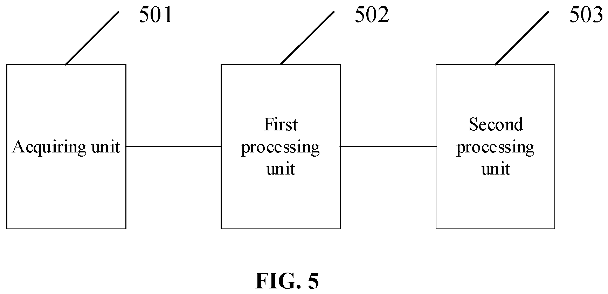

In order to implement the method of the embodiments of the present disclosure, the embodiments of the present disclosure further provide a network slice processing apparatus. As shown in FIG. 5, the apparatus includes:
an acquiring unit 501, configured to acquire at least two intentions for creating or modifying one or more network slices;
a first processing unit 502, configured to determine priorities of the at least two intentions according to a first policy, the first policy including at least a requirement of an SLA contracted between a network slice client and a network slice provider; and
a second processing unit 503, configured to create or modify the network slice based on the priorities of the intentions.

The first processing unit 502 is further configured to:
determine whether the at least two intentions are intentions of at least two network slice clients, to acquire a first determination result; and
in the case that the first determination result is that the at least two intentions are intentions of at least two network slice clients, determine the priorities of the at least two intentions according to the requirement of the SLA contracted between the network slice clients and the network slice provider,
an intention of a network slice client with a high SLA requirement having a high priority.

The first processing unit 502 is further configured to:
determine whether the at least two intentions are intentions of at least two network slice clients, to acquire a first determination result;
in the case that the first determination result is that the at least two intentions are intentions of one network slice client, determine whether the at least two intentions are intentions of at least two network slices, to acquire a second determination result; and
in the case that the second determination result is that the at least two intentions are intentions of at least two network slices, determine the priorities of the at least two intentions according to levels of the at least two network slices,
an intention of a network slice with a high network slice level having a high priority.

In an embodiment, the first processing unit 502 is further configured to:
determine whether the at least two intentions are intentions of at least two network slice clients, to acquire a first determination result;
in the case that the first determination result is that the at least two intentions are intentions of one network slice client, determine whether the at least two intentions are intentions of at least two network slices, to acquire a second determination result; and
in the case that the second determination result is that the at least two intentions are intentions of one network slice, determine the priorities of the intentions of at least two attributes of the network slice according to the requirement of the SLA contracted between the network slice client and the network slice provider.

In an embodiment, the apparatus further includes a receiving unit configured to receive first information including a feedback value of a first attribute.

Correspondingly, the second processing unit 503 is further configured to, in the case that the first attribute is created or determined, preferentially configure the first attribute according to the first information.

In an embodiment, the second processing unit 503 is further configured to perform at least one of the following:
converting an intention into a configuration of a network slice, i.e., converting an intention into device configuration information of a network slice;
verifying the configuration, i.e., verifying the device configuration information; and
after verification succeeds, performing the configuration, i.e., after verification succeeds, configuring the network infrastructure based on the device configuration information.

In practical applications, the acquiring unit 501 may be implemented by a processor plus a communication interface in the network slice processing apparatus. The first processing unit 502 and the second processing unit 503 may be implemented by the processor in the network slice processing apparatus. The receiving unit may be implemented by the communication interface in the network slice processing apparatus.

It should be noted that: for the network slice processing apparatus provided in the above embodiments, when network slice processing is performed, the division of the above program modules is merely used as an example for description. In practical applications, the above processing can be allocated to different program modules for completion according to needs, that is, the internal structure of the apparatus is divided into different program modules to accomplish all or part of the processing described above. In addition, the network slice processing apparatus and method embodiments provided in the above embodiments belong to the same concept. For a specific implementation process of the apparatus, refer to the method embodiments for details, which will not be repeated herein.

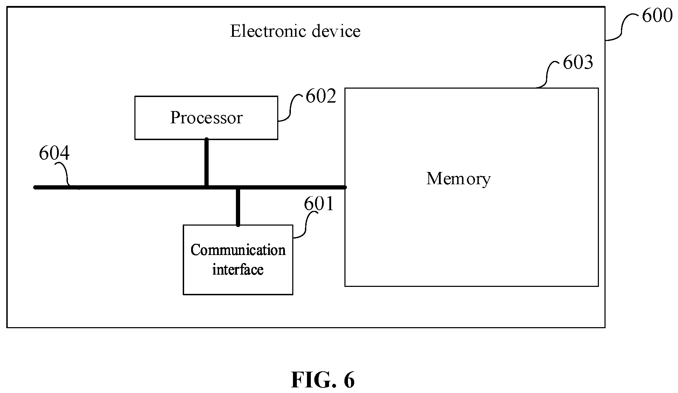

Based on hardware implementation of the above program modules and in order to implement the method of the embodiments of the present disclosure, the embodiments not being part of the invention further provide an electronic device. As shown in FIG. 6, the electronic device 600 includes:
a communication interface 601, capable of exchanging information with a terminal and/or a network side;
a processor 602, connected to the communication interface 601 to exchange information with the terminal and/or the network side, and used to, when running a computer program, perform the method provided in the above one or more technical solutions; and
a memory 603, on which the computer program is stored.

Specifically, the processor 602 is used to:
acquire, via the communication interface 601, at least two intentions for creating or modifying one or more network slices;
determine priorities of the at least two intentions according to a first policy, the first policy including at least a requirement of an SLA contracted between a network slice client and a network slice provider; and
create or modify the network slice based on the priorities of the intentions.

In an embodiment not being part of the invention, the processor 602 is further used to:
determine whether the at least two intentions are intentions of at least two network slice clients, to acquire a first determination result; and
in the case that the first determination result is that the at least two intentions are intentions of at least two network slice clients, determine the priorities of the at least two intentions according to the requirement of the SLA contracted between the network slice clients and the network slice provider,
an intention of a network slice client with a high SLA requirement having a high priority.

In an embodiment not being part of the invention, the processor 602 is further used to:
determine whether the at least two intentions are intentions of at least two network slice clients, to acquire a first determination result;
in the case that the first determination result is that the at least two intentions are intentions of one network slice client, determine whether the at least two intentions are intentions of at least two network slices, to acquire a second determination result; and
in the case that the second determination result is that the at least two intentions are intentions of at least two network slices, determine the priorities of the at least two intentions according to levels of the at least two network slices,
an intention of a network slice with a high network slice level having a high priority.

**In** an embodiment not being part of the invention, the processor 602 is further used to:
determine whether the at least two intentions are intentions of at least two network slice clients, to acquire a first determination result;
in the case that the first determination result is that the at least two intentions are intentions of one network slice client, determine whether the at least two intentions are intentions of at least two network slices, to acquire a second determination result; and
in the case that the second determination result is that the at least two intentions are intentions of one network slice, determine the priorities of the intentions of at least two attributes of the network slice according to the requirement of the SLA contracted between the network slice client and the network slice provider.

In an embodiment not being part of the invention, the communication interface 601 is further used to receive first information including a feedback value of a first attribute.

Correspondingly, the processor 602 is further used to, in the case that the first attribute is created or determined, preferentially configure the first attribute according to the first information.

In an embodiment not being part of the invention, the processor 602 is further used to perform at least one of the following:
converting an intention into a configuration of a network slice, i.e., converting an intention into device configuration information of a network slice;
verifying the configuration, i.e., verifying the device configuration information; and
after verification succeeds, performing the configuration, i.e., after verification succeeds, configuring the network infrastructure based on the device configuration information.

It should be noted that: For details of the process in which the communication interface 601 and the processor 602 specifically perform the above operations, please refer to the method embodiments, and the details will not be described herein again.

Certainly, in practical applications, various assemblies in the electronic device 600 are coupled together by means of a bus system 604. It can be understood that the bus system 604 is used to implement the connection and communication between these assemblies. The bus system 604 includes, in addition to a data bus, a power supply bus, a control bus, and a status signal bus. However, for the sake of clear illustration, various buses are all designated as the bus system 604 in FIG. 6.

The memory 603 in the embodiments not being part of the invention is used to store various types of data to support operations of the electronic device 600. Examples of the data include: any computer program operating on the electronic device 600.

The method disclosed in the embodiments of the present disclosure described above may be applied to the processor 602, or implemented by the processor 602. The processor 602 may be an integrated circuit chip with a signal processing capability. During implementation, each step in the method described above may be completed by an integrated logic circuit of hardware in the processor 602 or instructions in the form of software. The processor 602 described above may be a general-purpose processor, a Digital Signal Processor (DSP), or other programmable logic devices, a discrete gate or transistor logic device, a discrete hardware component, or the like. The various methods, steps, and logical block diagrams disclosed in the embodiments of the present disclosure may be implemented or executed by the processor 602. The general-purpose processor may be a microprocessor, any conventional processor or the like. The steps of the methods disclosed with reference to the embodiments of the present disclosure may be directly embodied as hardware and executed and completed by a decoding processor, or executed and completed by a combination of hardware and software modules in the decoding processor. The software modules may be located on a storage medium. The storage medium is located in the memory 603, and the processor 602 reads the information in the memory 603, and completes the steps of the aforementioned methods in combination with its hardware.

In an exemplary embodiment, the electronic device 600 may be implemented by one or more application specific integrated circuits (ASICs), DSPs, programmable logic devices (PLDs), complex programmable logic devices (CPLDs), field-programmable gate arrays (FPGAs), general-purpose processors, controllers, micro controller units (MCUs), microprocessors, or other electronic components, and is used to perform the aforementioned method.

It can be understood that the memory 603 in the embodiments of the present disclosure may be a volatile memory or a nonvolatile memory, or may include both volatile and nonvolatile memories. The non-volatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, a compact disc, or a compact disc read-only memory (CD-ROM). The magnetic surface memory may be a magnetic disk memory or a magnetic tape memory. The volatile memory may be a random access memory (RAM), which acts as an external cache. By way of example, but not by way of limitation, many forms of RAM may be used, for example, a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a SyncLink dynamic random access memory (SLDRAM), and a Direct Rambus random access memory (DRRAM). The memories described in the embodiments of the present disclosure are intended to include, but are not limited to, the aforementioned and any other suitable type of memory.

In an exemplary embodiment, the embodiments of the present disclosure further provide a storage medium, i.e., a computer storage medium, specifically a computer-readable storage medium, for example, including the memory 603 storing a computer program, wherein the computer program may be executed by the processor 602 of the electronic device 600, so as to complete the steps of the above method. The computer-readable storage medium may be a memory such as a FRAM, a ROM, a PROM, an EPROM, an EEPROM, a flash memory, a magnetic surface memory, a compact disc, or a CD-ROM.

It should be noted that: "first", "second", and the like are used for distinguishing between similar objects and not necessarily for describing a particular sequential or chronological order.

In addition, the technical solutions recited in the embodiments of the present disclosure may be arbitrarily combined as long as they do not conflict with each other.

The foregoing are merely preferred embodiments of the present disclosure, and are not intended to limit the scope of protection as defined by the appended claims.

## Claims

1. A network slice processing method, comprising:
acquiring (201) at least two intentions for creating or modifying one or more network slices;
determining (202) priorities of the at least two intentions according to a first policy, the first policy comprising at least a requirement of a service level agreement, SLA, contracted between a network slice client and a network slice provider; and
creating (203) or modifying the network slice based on the priorities of the intentions,
**characterized in that**, wherein the determining (202) priorities of the at least two intentions according to a first policy comprises:
determining whether the at least two intentions are intentions of at least two network slice clients, to acquire a first determination result; and
in the case that the first determination result is that the at least two intentions are the intentions of the at least two network slice clients, determining the priorities of the at least two intentions according to the requirement of the SLA contracted between the network slice clients and the network slice provider,
wherein for a network slice client with a high SLA requirement, an intention of the network slice client has a high priority.

2. The method according to claim 1, wherein the determining (202) priorities of the at least two intentions according to a first policy further comprises:
in the case that the first determination result is that the at least two intentions are intentions of one network slice client, determining whether the at least two intentions are intentions of at least two network slices, to acquire a second determination result;
in the case that the second determination result is that the at least two intentions are intentions of at least two network slices, determining the priorities of the at least two intentions according to levels of the at least two network slices,
wherein for a network slice with a high network slice level, an intention of the network slice has a high priority.

3. The method according to claim 1, wherein the determining (202) priorities of the at least two intentions according to a first policy further comprises:
in the case that the first determination result is that the at least two intentions are intentions of one network slice client, determining whether the at least two intentions are intentions of at least two network slices, to acquire a second determination result; and
in the case that the second determination result is that the at least two intentions are intentions of one network slice, determining the priorities of the intentions of at least two attributes of the network slice according to the requirement of the SLA contracted between the network slice client and the network slice provider.

4. The method according to claim 1, further comprising:
receiving first information comprising a feedback value of a first attribute corresponding to one of the at least two intentions; and
if the first attribute is created or determined, performing preferentially an operation of modifying a network slice of the first attribute.

5. The method according to any one of claims 1 to 5, further comprising at least one of the following:
converting an intention into a configuration of a network slice;
verifying the configuration; and
after verification succeeds, performing the configuration.

6. A network slice processing apparatus, comprising:
an acquiring unit (501), configured to acquire at least two intentions for creating or modifying one or more network slices;
a first processing unit (502), configured to determine priorities of the at least two intentions according to a first policy, the first policy comprising at least a requirement of a service level agreement, SLA, contracted between a network slice client and a network slice provider; and
a second processing unit (503), configured to create or modify the network slice based on the priorities of the intentions,
**characterized in that**, the first processing unit (502) is further configured to:
determine whether the at least two intentions are intentions of at least two network slice clients, to acquire a first determination result; and
in the case that the first determination result is that the at least two intentions are the intentions of the at least two network slice clients, determine the priorities of the at least two intentions according to the requirement of the SLA contracted between the network slice clients and the network slice provider,
wherein for a network slice client with a high SLA requirement, an intention of the network slice client has a high priority.

7. The network slice processing apparatus according to claim 6, wherein the first processing unit (502) is further configured to:
in the case that the first determination result is that the at least two intentions are intentions of one network slice client, determine whether the at least two intentions are intentions of at least two network slices, to acquire a second determination result;
in the case that the second determination result is that the at least two intentions are intentions of at least two network slices, determine the priorities of the at least two intentions according to levels of the at least two network slices,
wherein for a network slice with a high network slice level, an intention of the network slice has a high priority.

8. The network slice processing apparatus according to claim 6, wherein the first processing unit (502) is further configured to:
in the case that the first determination result is that the at least two intentions are intentions of one network slice client, determine whether the at least two intentions are intentions of at least two network slices, to acquire a second determination result; and
in the case that the second determination result is that the at least two intentions are intentions of one network slice, determine the priorities of the intentions of at least two attributes of the network slice according to the requirement of the SLA contracted between the network slice client and the network slice provider.

9. The network slice processing apparatus according to claim 6, further comprising:
a receiving unit, configured to receive first information comprising a feedback value of a first attribute corresponding to one of the at least two intentions; and
a second processing unit (503) configured to perform preferentially an operation of modifying a network slice of the first attribute if the first attribute is created or determined.

10. The network slice processing apparatus according to claim 9, wherein the second processing unit (503) is further configured to perform at least one of:
converting an intention into a configuration of a network slice;
verifying the configuration; and
after verification succeeds, performing the configuration.

11. A storage medium having stored thereon a computer program that when executed by a processor, implements the steps of the method according to any one of claims 1 to 5.

## Patentansprüche

1. Netzwerk-Slice-Verarbeitungsverfahren, umfassend:
Erfassen (201) von mindestens zwei Intentionen zum Erzeugen oder Modifizieren eines oder mehrerer Netzwerk-Slices;
Bestimmen (202) von Prioritäten der mindestens zwei Intentionen gemäß einer ersten Richtlinie, wobei die erste Richtlinie mindestens eine Anforderung eines Service-Level-Agreements, SLA, umfasst, das zwischen einem Netzwerk-Slice-Client und einem Netzwerk-Slice-Provider geschlossen wurde; und
Erzeugen (203) oder Modifizieren des Netzwerk-Slice basierend auf den Prioritäten der Intentionen,
**dadurch gekennzeichnet, dass**, wobei das Bestimmen (202) von Prioritäten der mindestens zwei Intentionen gemäß einer ersten Richtlinie umfasst:
Bestimmen, ob die mindestens zwei Intentionen Intentionen von mindestens zwei Netzwerk-Slice-Clients sind, um ein erstes Bestimmungsergebnis zu erhalten; und
in dem Fall, dass das erste Bestimmungsergebnis ist, dass die mindestens zwei Intentionen die Intentionen der mindestens zwei Netzwerk-Slice-Clients sind, Bestimmen der Prioritäten der mindestens zwei Intentionen gemäß der Anforderung des zwischen den Netzwerk-Slice-Clients und dem Netzwerk-Slice-Provider geschlossenen SLA,
wobei für einen Netzwerk-Slice-Client mit einer hohen SLA-Anforderung eine Intention des Netzwerk-Slice-Clients eine hohe Priorität aufweist.

2. Verfahren nach Anspruch 1, wobei das Bestimmen (202) von Prioritäten der mindestens zwei Intentionen gemäß einer ersten Richtlinie ferner umfasst:
in dem Fall, dass das erste Bestimmungsergebnis ist, dass die mindestens zwei Intentionen Intentionen eines Netzwerk-Slice-Clients sind, Bestimmen, ob die mindestens zwei Intentionen Intentionen von mindestens zwei Netzwerk-Slices sind, um ein zweites Bestimmungsergebnis zu erhalten;
in dem Fall, dass das zweite Bestimmungsergebnis ist, dass die mindestens zwei Intentionen Intentionen von mindestens zwei Netzwerk-Slices sind, Bestimmen der Prioritäten der mindestens zwei Intentionen gemäß Levels der mindestens zwei Netzwerk-Slices,
wobei für einen Network-Slice mit einem hohen Netzwerk-Slice-Level eine Intention des Netzwerk-Slice eine hohe Priorität aufweist.

3. Verfahren nach Anspruch 1, wobei das Bestimmen (202) von Prioritäten der mindestens zwei Intentionen gemäß einer ersten Richtlinie ferner umfasst:
in dem Fall, dass das erste Bestimmungsergebnis ist, dass die mindestens zwei Intentionen Intentionen eines Netzwerk-Slice-Clients sind, Bestimmen, ob die mindestens zwei Intentionen Intentionen von mindestens zwei Netzwerk-Slices sind, um ein zweites Bestimmungsergebnis zu erhalten; und
in dem Fall, dass das zweite Bestimmungsergebnis ist, dass die mindestens zwei Intentionen Intentionen eines Netzwerk-Slice sind, Bestimmen der Prioritäten der Intentionen von mindestens zwei Attributen des Netzwerk-Slice gemäß der Anforderung des zwischen dem Netzwerk-Slice-Client und dem Netzwerk-Slice-Provider vertraglich vereinbarten SLA.

4. Verfahren nach Anspruch 1, ferner umfassend:
Empfangen einer ersten Information, umfassend einen Rückmeldungswert eines ersten Attributs, das einer der mindestens zwei Intentionen entspricht; und
wenn das erste Attribut erzeugt oder bestimmt wird, bevorzugtes Durchführen eines Vorgangs zum Modifizieren eines Netzwerk-Slices des ersten Attributs.

5. Verfahren nach einem der Ansprüche 1 bis 5, ferner umfassend mindestens eines der Folgenden:
Umwandeln einer Intention in eine Konfiguration eines Netzwerk-Slices;
Überprüfen der Konfiguration; und
nach erfolgreicher Verifizierung, Durchführen der Konfiguration.

6. Netzwerk-Slice-Verarbeitungseinrichtung, umfassend:
eine Erfassungseinheit (501), die konfiguriert ist, um mindestens zwei Intentionen zum Erzeugen oder Modifizieren eines oder mehrerer Netzwerk-Slices zu erfassen;
eine erste Verarbeitungseinheit (502), die konfiguriert ist, um Prioritäten der mindestens zwei Intentionen gemäß einer ersten Richtlinie zu bestimmen, wobei die erste Richtlinie mindestens eine Anforderung eines Service-Level-Agreements, SLA, umfasst, das zwischen einem Netzwerk-Slice-Client und einem Netzwerk-Slice-Provider vertraglich vereinbart wurde; und
eine zweite Verarbeitungseinheit (503), die konfiguriert ist, um den Netzwerk-Slice basierend auf den Prioritäten der Intentionen zu erzeugen oder zu modifizieren,
**dadurch gekennzeichnet, dass** die erste Verarbeitungseinheit (502) konfiguriert ist zum:
Bestimmen, ob die mindestens zwei Intentionen Intentionen von mindestens zwei Netzwerk-Slice-Clients sind, um ein erstes Bestimmungsergebnis zu erhalten; und
in dem Fall, dass das erste Bestimmungsergebnis ist, dass die mindestens zwei Intentionen die Intentionen der mindestens zwei Netzwerk-Slice-Clients sind, Bestimmen der Prioritäten der mindestens zwei Intentionen gemäß der Anforderung des zwischen den Netzwerk-Slice-Clients und dem Netzwerk-Slice-Provider geschlossenen SLA,
wobei für einen Netzwerk-Slice-Client mit einer hohen SLA-Anforderung eine Intention des Netzwerk-Slice-Clients eine hohe Priorität aufweist.

7. Netzwerk-Slice-Verarbeitungseinrichtung nach Anspruch 6, wobei die erste Verarbeitungseinheit (502) ferner konfiguriert ist zum:
in dem Fall, dass das erste Bestimmungsergebnis ist, dass die mindestens zwei Intentionen Intentionen eines Netzwerk-Slice-Clients sind, Bestimmen, ob die mindestens zwei Intentionen Intentionen von mindestens zwei Netzwerk-Slices sind, um ein zweites Bestimmungsergebnis zu erhalten;
in dem Fall, dass das zweite Bestimmungsergebnis ist, dass die mindestens zwei Intentionen Intentionen von mindestens zwei Netzwerk-Slices sind, Bestimmen der Prioritäten der mindestens zwei Intentionen gemäß Levels der mindestens zwei Netzwerk-Slices,
wobei für einen Netzwerk-Slice mit einem hohen Netzwerk-Slice-Level eine Intention des Netzwerk-Slice eine hohe Priorität aufweist.

8. Netzwerk-Slice-Verarbeitungseinrichtung nach Anspruch 6, wobei die erste Verarbeitungseinheit (502) ferner konfiguriert ist zum:
in dem Fall, dass das erste Bestimmungsergebnis ist, dass die mindestens zwei Intentionen Intentionen eines Netzwerk-Slice-Clients sind, Bestimmen, ob die mindestens zwei Intentionen Intentionen von mindestens zwei Netzwerk-Slices sind, um ein zweites Bestimmungsergebnis zu erhalten; und
in dem Fall, dass das zweite Bestimmungsergebnis ist, dass die mindestens zwei Intentionen Intentionen eines Netzwerk-Slice sind, Bestimmen der Prioritäten der Intentionen von mindestens zwei Attributen des Netzwerk-Slice gemäß der Anforderung des zwischen dem Netzwerk-Slice-Client und dem Netzwerk-Slice-Provider vertraglich vereinbarten SLA.

9. Netzwerk-Slice-Verarbeitungseinrichtung nach Anspruch 6, ferner umfassend:
eine Empfangseinheit, die konfiguriert ist, um eine erste Information zu empfangen, die einen Rückmeldungswert eines ersten Attributs umfasst, das einer der mindestens zwei Intentionen entspricht; und
eine zweite Verarbeitungseinheit (503), die konfiguriert ist, um vorzugsweise einen Vorgang zum Modifizieren eines Netzwerk-Slices des ersten Attributs durchzuführen, wenn das erste Attribut erzeugt oder bestimmt wird.

10. Netzwerk-Slice-Verarbeitungseinrichtung nach Anspruch 9, wobei die zweite Verarbeitungseinheit (503) ferner konfiguriert ist, um mindestens eines der Folgenden durchzuführen:
Umwandeln einer Intention in eine Konfiguration eines Netzwerk-Slices;
Überprüfen der Konfiguration; und
nach erfolgreicher Verifizierung, Durchführen der Konfiguration.

11. Speichermedium, das ein Computerprogramm darauf gespeichert aufweist, das beim Ausführen durch einen Prozessor die Schritte des Verfahrens nach einem der Ansprüche 1 bis 5 implementiert.

## Revendications

1. Procédé de traitement de tranche de réseau, comprenant :
l'acquisition (201) d'au moins deux intentions pour la création ou la modification d'une ou plusieurs tranches de réseau ;
la détermination (202) de priorités des au moins deux intentions selon une première politique, la première politique comprenant au moins une exigence d'un accord de niveau de service, SLA, contracté entre un client de tranche de réseau et un fournisseur de tranche de réseau ; et
la création (203) ou la modification de la tranche de réseau en fonction des priorités des intentions,
**caractérisé en ce que,** dans lequel la détermination (202) de priorités des au moins deux intentions selon une première politique comprend :
le fait de déterminer si les au moins deux intentions sont des intentions d'au moins deux clients de tranche de réseau, pour acquérir un premier résultat de détermination ; et
dans le cas où le premier résultat de détermination est que les au moins deux intentions sont les intentions des au moins deux clients de tranche de réseau, la détermination des priorités des au moins deux intentions selon l'exigence du SLA contracté entre les clients de tranche de réseau et le fournisseur de tranche de réseau,
dans lequel pour un client de tranche de réseau avec une exigence SLA élevée, une intention du client de tranche de réseau a une priorité élevée.

2. Procédé selon la revendication 1, dans lequel la détermination (202) des priorités des au moins deux intentions selon une première politique comprend en outre :
dans le cas où le premier résultat de détermination est que les au moins deux intentions sont des intentions d'un client de tranche de réseau, le fait de déterminer si les au moins deux intentions sont des intentions d'au moins deux tranches de réseau, pour acquérir un second résultat de détermination ;
dans le cas où le second résultat de détermination est que les au moins deux intentions sont des intentions d'au moins deux tranches de réseau, la détermination des priorités des au moins deux intentions selon des niveaux des au moins deux tranches de réseau,
dans lequel pour une tranche de réseau avec un niveau de tranche de réseau élevé, une intention de la tranche de réseau a une priorité élevée.

3. Procédé selon la revendication 1, dans lequel la détermination (202) des priorités des au moins deux intentions selon une première politique comprend en outre :
dans le cas où le premier résultat de détermination est que les au moins deux intentions sont des intentions d'un client de tranche de réseau, le fait de déterminer si les au moins deux intentions sont des intentions d'au moins deux tranches de réseau, pour acquérir un second résultat de détermination ; et
dans le cas où le second résultat de détermination est que les au moins deux intentions sont des intentions d'une tranche de réseau, la détermination des priorités des intentions d'au moins deux attributs de la tranche de réseau selon l'exigence du SLA contracté entre le client de tranche de réseau et le fournisseur de tranche de réseau.

4. Procédé selon la revendication 1, comprenant en outre :
la réception de premières informations comprenant une valeur de rétroaction d'un premier attribut correspondant à l'une des au moins deux intentions ; et
si le premier attribut est créé ou déterminé, la mise en œuvre préférentielle d'une opération de modification d'une tranche de réseau du premier attribut.

5. Procédé selon l'une quelconque des revendications 1 à 5, comprenant en outre au moins l'une de ce qui suit :
la conversion d'une intention en une configuration d'une tranche de réseau ;
la vérification de la configuration ; et
après que la vérification a réussi, la mise en œuvre de la configuration.

6. Appareil de traitement de tranche de réseau, comprenant :
une unité d'acquisition (501), configurée pour acquérir au moins deux intentions pour la création ou la modification d'une ou plusieurs tranches de réseau ;
une première unité de traitement (502), configurée pour déterminer des priorités des au moins deux intentions selon une première politique, la première politique comprenant au moins une exigence d'un accord de niveau de service, SLA, contracté entre un client de tranche de réseau et un fournisseur de tranche de réseau ; et
une seconde unité de traitement (503), configurée pour créer ou modifier la tranche de réseau en fonction des priorités des intentions,
**caractérisé en ce que,** la première unité de traitement (502) est configurée en outre pour :
déterminer si les au moins deux intentions sont des intentions d'au moins deux clients de tranche de réseau, pour acquérir un premier résultat de détermination ; et
dans le cas où le premier résultat de détermination est que les au moins deux intentions sont les intentions des au moins deux clients de tranche de réseau, déterminer les priorités des au moins deux intentions selon l'exigence du SLA contracté entre les clients de tranche de réseau et le fournisseur de tranche de réseau,
dans lequel pour un client de tranche de réseau avec une exigence SLA élevée, une intention du client de tranche de réseau a une priorité élevée.

7. Appareil de traitement de tranche de réseau selon la revendication 6, dans lequel la première unité de traitement (502) est configurée en outre pour :
dans le cas où le premier résultat de détermination est que les au moins deux intentions sont des intentions d'un client de tranche de réseau, déterminer si les au moins deux intentions sont des intentions d'au moins deux tranches de réseau, pour acquérir un second résultat de détermination ;
dans le cas où le second résultat de détermination est que les au moins deux intentions sont des intentions d'au moins deux tranches de réseau, déterminer les priorités des au moins deux intentions selon des niveaux des au moins deux tranches de réseau,
dans lequel pour une tranche de réseau avec un niveau de tranche de réseau élevé, une intention de la tranche de réseau a une priorité élevée.

8. Appareil de traitement de tranche de réseau selon la revendication 6, dans lequel la première unité de traitement (502) est configurée en outre pour :
dans le cas où le premier résultat de détermination est que les au moins deux intentions sont des intentions d'un client de tranche de réseau, déterminer si les au moins deux intentions sont des intentions d'au moins deux tranches de réseau, pour acquérir un second résultat de détermination ; et
dans le cas où le second résultat de détermination est que les au moins deux intentions sont des intentions d'une tranche de réseau, déterminer les priorités des intentions d'au moins deux attributs de la tranche de réseau selon l'exigence du SLA contracté entre le client de tranche de réseau et le fournisseur de tranche de réseau.

9. Appareil de traitement de tranche de réseau selon la revendication 6, comprenant en outre :
une unité de réception, configurée pour recevoir des premières informations comprenant une valeur de rétroaction d'un premier attribut correspondant à l'une des au moins deux intentions ; et
une seconde unité de traitement (503) configurée pour mettre en œuvre préférentiellement une opération de modification d'une tranche de réseau du premier attribut si le premier attribut est créé ou déterminé.

10. Appareil de traitement de tranche de réseau selon la revendication 9, dans lequel la seconde unité de traitement (503) est configurée en outre pour mettre en œuvre au moins l'une parmi :
la conversion d'une intention en une configuration d'une tranche de réseau ;
la vérification de la configuration ; et
après que la vérification a réussi, la mise en œuvre de la configuration.

11. Support de stockage sur lequel est stocké un programme informatique qui lorsqu'il est exécuté par un processeur, implémente les étapes du procédé selon l'une quelconque des revendications 1 à 5.
